# FASCICULE DE BREVET EUROPEEN

(11) **EP 0 758 002 B1**
(45) Date de publication et mention de la délivrance du brevet: **28.03.2001**
(21) Numéro de dépôt: 96401591.1
(22) Date de dépôt: 17.07.1996
(51) Int. Cl.: C08K 13/02

(54) **Compositions thermoplastiques à tenue au feu améliorée**
Thermoplastische Zusammensetzungen mit verbesserter Feuerbeständigkeit
Thermoplastic composites having improved fire resistance

(30) Priorité: 21.07.1995 FR 9508890
(43) Date de publication de la demande: 12.02.1997
(73) Titulaire: Atofina, 92800 Puteaux (FR)
(72) Inventeur: Breant, Patrice, 27470 Serquigny (FR); Poyet, Olivier, 75016 Paris (FR)

(56) Documents cités:
- EP-A- 0 122 697
- EP-A- 0 169 085
- EP-A- 0 571 241

## Description

La présente invention a pour objet des compositions thermoplastiques à base de résines polyamides et à tenue au feu améliorée. La tenue au feu s'apprécie d'une part par la résistance à la combustion ou à l'auto-inflammmation et d'autre part par l'aptitude au gouttage.

Du fait de leurs excellentes propriétés physiques, les résines polyamides thermoplastiques sont largement utilisées dans de nombreuses applications dans l'industrie automobile, l'aéronautique, le domaine électrique, etc, mais leur développement est parfois freiné à cause de leur aptitude à la combustion.

On a proposé dans la littérature de nombreuses solutions pour améliorer la résistance à la combustion des compositions thermoplastiques à base de polyamide.

Des dérivés halogénés tels que décabromodiphényléther, décabromodiphényle, éventuellement en association avec Sb₂O_{3,} ont été ajoutés mais les composés halogénés sont générateurs d'acides halogénés qui se dégagent lors de la fabrication et/ou lors de l'utilisation des compositions auxquelles ils sont incorporés, entraînant ainsi des risques de corrosion des appareillages et des nuisances pour l'environnement.

L'oxyde d'antimoine Sb₂O₃ est également utilisé en combinaison avec l'hydroxyde de magnésium et éventuellement le cyanurate de mélamine dans EP 571241 au nom de la demanderesse pour l'ignifugation de compositions thermoplastiques polyamides.

Il est également connu d'incorporer du phosphore ou ses dérivés, tels que phosphore rouge (US 3.778.407), phosphites, phosphates, mais ces produits sont de mise en oeuvre malaisée et confèrent une teinte rougeâtre aux compositions de polyamides.

Le cyanurate de mélamine améliore la résistance à la combustion des polyamides mais il n'est pas aussi efficace, à poids égal, que certains composés à haute teneur en chlore ou en brome.

Si les composés énumérés ci-dessus réduisent de façon notable l'aptitude à la combustion des résines auxquelles ils sont incorporés, leur influence sur l'aptitude au gouttage est faible.

Dans EP 169.085 au nom de la demanderesse, on ajoute simultanément un polyol et du cyanurate de mélamine aux compositions à base de polyamide, ce qui permet d'améliorer l'aptitude au gouttage mais de façon encore insuffisante.

Les polymères et copolymères d'hydrocarbures alcénylaromatiques présentent une tenue au feu médiocre et brûlent facilement.

II est connu d'ajouter des agents ignifugeants à ces polymères, copolymères et aux compositions les contenant. Les plus couramment utilisés consistent en composés contenant au moins un atome d'halogène, généralement le brome.

La présente invention propose une composition thermoplastique à base de résine polyamide et à tenue au feu améliorée, caractérisée en ce que :
- elle comprend du Sb₂O₃, du cyanurate de mélamine et au moins un polyol contenant au moins quatre fois la fonction alcool en tant qu'additifs anti-feu,
- que ces trois additifs représentent de 10 à 15 % en poids par rapport au poids total de la composition,
- chacun de ces trois additifs anti-feu représente le tiers du poids total des trois additifs.

Parmi les compositions thermoplastiques selon l'invention, on citera tout particulièrement celles à base de résine(s) polyamide(s) qui contiennent des motifs aliphatiques et/ou cycloaliphatiques et/ou aromatiques. Elles peuvent être obtenues par polymérisation anionique d'un ou plusieurs lactames tels que le caprolactame, l'oenantholactame, le dodécalactame ou lauryllactame ou par polycondensation hydrolytique de lactame(s) soit d'un ou plusieurs aminoacides tels que les acides aminocaproïque, amino-7 heptanoïque, amino-11 undécanoïque, amino-12 dodécanoïque, soit d'un ou plusieurs sels ou mélanges de diamines telles que l'hexaméthylènediamine, la dodécaméthylènediamine, la métaxylène diamine, le bisparaaminocyclohexylméthane, la triméthylhexaméthylènediamine, avec des diacides tels que les acides iso-, téréphtalique, adipique, azélaïque, subérique, sébacique et dodécanedicarboxylique soit à partir de mélanges de ces monomères conduisant à des copolyamides.

Par PA selon l'invention, on entend également les élastomères thermoplastiques (TPE) à base de polyamide qui sont des copolymères blocs, appelés aussi polyétheramides ou polyesteramides, dont les séquences rigides sont constituées de polyamide et les séquences souples cristallisables de polyéther ou de polyester.

On entend également les mélanges de différents polyamides énumérés ci-dessus entre eux et également leurs mélanges avec d'autres polymères tels que les polyoléfines, à condition que le ou les PA représentent au moins 50 % du poids total du mélange. On citera tout particulièrement les mélanges de PA et d'élastomères polyoléfiniques qui améliorent la résistance au choc des PA. A titre d'exemples de ces renforçants choc, on peut citer les caoutchoucs d'éthylène et de propylène (EPR), les caoutchoucs d'éthylène,de propylène et de diène (EPDM), les copolymères d'éthylène et d'acétate de vinyle (EVA), les terpolymères éthylène-ester acrylique-anhydride maléique, les terpolymères sur base éthylène-dérivé acrylique (EDA).

Les PA peuvent être plastifiés à l'aide d'additifs couramment utilisés pour ce genre de modification. Ils peuvent être chargés et/ou contenir divers additifs, par exemple des additifs destinés à protéger le PA contre la thermo-oxydation, la thermo-UV-dégradation, des additifs de mise en oeuvre tels que des lubrifiants, des colorants ou pigments, etc.

L'oxyde d'antimoine se présente en général sous forme de poudre fine dont granulométrie est de l'ordre du µm.

Par cyanurate de mélamine, on entend les composés résultant de l'action de la mélamine sur l'acide cyanurique, et particulièrement le composé résultant de la réaction équimolaire de la mélamine sur l'acide cyanurique, ce dernier pouvant être sous la forme énolique ou cétonique.

Par polyol, on entend les composés contenant au moins quatre fois la fonction alcool tels que les tétrols comme l'érythrol, le monopentaérythritol (PER) et ses dérivés polysubstitués, les pentols tels que le xylitol, l'arabitol et les hexols tels que le mannitol, le sorbitol et ses homologues supérieurs.

L'incorporation de Sb₂O₃, du cyanurate de mélamine, du ou des polyols, appelés les 3 additifs anti-feu selon l'invention, et des éventuels additifs, finement divisés, dans les compositions selon l'invention, notamment à base de PA, s'effectue en général par malaxage dans la résine PA à l'état fondu ; la température de malaxage est en général comprise entre 150 et 300° C et de préférence entre 180 et 230° C.

On peut préparer un mélange-maître ou un produit final.

Le mélange-maître présente l'avantage d'assurer une bonne prédispersion des constituants qui seront malaxés une nouvelle fois lors de la dilution ultérieure du mélange-maître dans la résine finale.

La résine du mélange-maître peut être identique ou différente de la résine finale.

La demanderesse a constaté qu'un mélange-maître à base d'élastomère thermoplastique à base de PA était particulièrement avantageux pour des dilutions ultérieures dans de nombreuses résines PA parmi lesquelles on peut citer le PA-11, le PA-12, le PA-12,12, le PA-6, le PA-6,12, les élastomères thermoplastiques à base de PA-11, PA-12, PA-6.

On peut réaliser un mélange-maître à base de la ou des résines additionnelles, puis le diluer dans la résine finale. Ce système est particulièrement avantageux dans le cas des résines PA renforcées choc avec des élastomères polyoléfiniques : les 3 additifs anti-feu mélangés avec l'élastomère polyoléfinique constituent le mélange-maître qui est ultérieurement dilué dans la résine PA ou PS.

Les compositions selon l'invention trouvent des applications dans différents domaines par transformation en articles industriels destinés notamment aux industries de l'automobile, de l'aéronautique, de l'électro-ménager, du matériel audiovisuel et du matériel électrique; elles sont bien adaptées pour la réalisation d'éléments de câblerie, par exemple d'appareillages électriques. Elles sont particulièrement aptes à la transformation en objets moulés, extrudés, injectés, en films, en feuilles, en fibres, en matériaux composites tels que objets coextrudés, films multicouches, ainsi qu'en poudres pour le revêtement de substrats.

Dans tout ce qui suit, la viscosité inhérente des PA est mesurée à 25 °C dans le méta-crésol pour 0,5 g de polymère dans 100 ml de méta-crésol.

Le point de fusion des résines PA est mesuré selon la norme ASTM D 3418 et leur dureté Shore D est mesurée selon la norme ASTM D 2240.

Sauf indication contraire, les proportions sont exprimées en poids.

### Préparation de mélanges-maîtres MM1 à MM8

Dans un mélangeur interne MELLI dont on a préchauffé la cuve à 100 °C, on charge divers additifs dont la nature et les proportions respectives (% en poids) sont répertoriées dans le tableau 1 et des granulés de coPA-6/12. Les additifs représentent 50 % du poids total du mélange-maître.

Le coPA-6/12 (point de fusion : 130 °C ; dureté Shore D : 60) est commercialisé par la demanderesse.

Le cyanurate de mélamine (CM) utilisé est commercialisé par la Société CHEMIE-LINZ AG.

Le monopentaérythritol (PER) utilisé est commercialisé par la Société CELANESE

Sb₂O₃ est commercialisé par la Société COOKSON sous la dénomination TIMONOX®.

Le polyphosphate d'ammonium (APP) est commercialisé par la Société HOECHST sous la dénomination EXOLIT 622.

La zéolithe (ZEO) est commercialisée par la Société CECA S.A. sous la dénomination de zéolithe A4.

L'oxyde de titane de granulométrie fine (environ 1 µm) est commercialisé par la Société THANN & MULHOUSE sous la dénomination RL 90.

**Tableau 1**

| N° mélange-maître | CM | PER | Sb₂O₃ | APP | ZEO | TiO₂ |
|---|---|---|---|---|---|---|
| MM1 | 27,75 | 5,55 | | 16,7 | | |
| MM2 | 35,75 | 7,15 | | 7,1 | | |
| MM3 | 35,75 | 7,15 | | | 7,1 | |
| MM4 | 35,75 | 7,15 | | | | 7,1 |
| MM5 | 35,75 | 7,15 | 7,1 | | | |
| MM6 | 35,75 | 7,15 | | 3,55 | 3,55 | |
| MM7 | 31,25 | 12,5 | | 3,125 | 3,125 | |
| MM8 | 41,7 | 8,3 | | | | |

### Exemples 1 à 14

Les mélanges-maîtres précédents sont ensuite dilués avec du PA-11 (viscosité inhérente : 1 ; point de fusion : 185 °C) ou du PA-12 (viscosité inhérente : 1 ; point de fusion : 175 °C) commercialisés par la demanderesse dans une extrudeuse bi-vis contrarotative BRABENDER ZSK (vitesse de vis 60 trs/min ; débit 2 kg/h ; profil de températures 180-210-230°C).

On évalue la tenue au feu en mesurant l'indice d'oxygène limite (IOL) sur des barreaux ISO R178 (80x10x4 mm³) obtenus sur presse MINING dans les conditions suivantes à partir ∗des échantillons ci-dessus, et à titre comparatif à partir
* de PA-12 sans additifs de tenue au feu
* de PA-11 sans additifs de tenue au feu
* d'une composition à base de PA-11 selon l'enseignement de EP169.085 contenant PER, CM mais pas de Sb₂O₃ ni de composé halogéné (point de fusion : 185°C).

- température d'injection :: 235 °C pour PA-12 sans additifs de tenue au feu 225 °C pour composition à base de PA-12 215 °C pour PA-12 sans additifs de tenue au feu 215 °C pour composition à base de PA-11
- température du moule :: température ambiante
- cycle d'injection :: 15 s d'injection proprement dite puis maintien sous presse 15 s.

Les résultats de mesure d'lOL ainsi que la concentration en mélange-maître (% en poids) sont réunis dans le tableau 2.

**Tableau 2**

| N° exemple | Nature PA | Mélange-maître | Dilution (%) | IOL (%) |
|---|---|---|---|---|
| 1* | PA-12 | MM8 | 24 | 30 |
| 2* | PA-12 | MM1 | 36 | 27 |
| 3* | PA-12 | MM7 | 36 | 29 |
| 4* | PA-12 | MM2 | 28 | 30 |
| 5* | PA-12 | MM3 | 28 | 30 |
| 6* | PA-12 | MM6 | 28 | 27 |
| 7* | PA-12 | MM7 | 28 | 29 |
| 8* | PA-12 | MM7 | 32 | 31 |
| 9* | PA-11 | MM8 | 24 | 36 |
| 10* | PA-12 | MM4 | 28 | 30 |
| 11* | PA-12 | MM5 | 28 | 35 |
| 12* | PA-12 | | | 23 |
| 13* | PA-11 | | | 26 |
| 14* | PA-12 | | | 36 |

| | | | | |
|---|---|---|---|---|
| *Exemple comparatif | | | | |

### Exemples 15 à 23

On réalise des compositions contenant 86 % en poids de PA-12, 10 % de CM, 2 % de PER décrits précédemment et 2 % d'additifs divers dans des conditions opératoires identiques à celles des échantillons des exemples 1 à 14.

Les caractéristiques des additifs sont les suivantes :

Sb₂O₃ est identique à celui mis en oeuvre précédemment,

L'hydroxyde de magnésium Mg(OH)₂ de granulométrie 1 µm est commercialisé par la Société MARTINSWERKE sous la dénomination MARTIFIN ®H10.

L'hydroxyde d'aluminium Al(OH)₃ de granulométrie 1 pm est commercialisé par la Société MARTINSWERKE sous la dénomination MARTINAL® OL111LE.

La boéhmite AIO.OH de granulométrie 1 µm est commercialisée par la Société VAW ALUMINIUM.

La silice SiO₂ a une granulométrie de 1 µm.

Le dilauratedibutylétain (DLDBE) est commercialisé par la Société MERCK.

L'acide orthoborique H₃BO₃ est commercialisé par la Société PROLABO.

Les échantillons sont alors façonnés sous forme de barreaux conformément à la norme ISO R178 de façon identique à celle des échantillons des exemples 1 à 14 et on mesure leur IOL. Les résultats ont réunis dans le tableau 3.

**Tableau 3**

| N° exemple | Nature additif | IOL (%) |
|---|---|---|
| 15* | - | 29,7 |
| 16* | Sb₂O₃ | 34 |
| 17* | Mg(OH)₂ | 26,5 |
| 18* | Al(OH)₃ | 28 |
| 19* | AlO.OH | 28,5 |
| 20* | DLDBE | 29 |
| 21* | Fe₂O₃ | 29,8 |
| 22* | SiO₂ | 29,2 |
| 23* | H₃BO₃ | 27,2 |

| | | |
|---|---|---|
| *Exemple comparatif | | |

### Exemples 24 à 33

On réalise des compositions contenant différentes résines à base PA, de 10 % de CM, 2 % de PER décrits précédemment et 2 % de Sb₂O₃ et à titre comparatif, des compositions sans Sb₂O₃.

Le PA-12 est identique à celui mis en oeuvre dans les exemples 1 à 8 et 10 à 12.

Le coPA-6/12 est identique à celui mis en oeuvre dans les mélanges-maîtres MM1 à MM8.

Le PEBA (polyéther bloc amide), commercialisé par la demanderesse, est un élastomère thermoplastique à base de polyamide dont les séquences polyéther sont du polytétraméthylène glycol (PTMG) et représentent 33 % du poids total du PEBA et les séquences PA sont du PA-12 (66 % du poids total du PEBA) (point de fusion : 159 °C ; dureté Shore D : 55).

Le mélange PP/PA-6 (point de fusion : 220 °C) est un alliage compatibilisé commercialisé par la demanderesse.

Le PA-6 utilisé est un grade moulage, sa température de fusion est égale à 218 °C.

Les échantillons sont alors façonnés sous forme de barreaux conformément à la norme ISO R178 de façon identique à celle des échantillons des exemples 1 à 23 et on mesure leur IOL ainsi que la différence entre l'IOL des compositions avec et sans Sb₂O₃. Les résultats ont réunis dans le tableau 4.

**Tableau 4**

| N° exemple | Nature résine PA | présence ou non de Sb₂O₃ | IOL (%) | ΔIOL |
|---|---|---|---|---|
| 24* | PA-12 | - | 29,7 | |
| 25* | PA-12 | Sb₂O₃ | 33,6 | +3,3 |
| 26* | PA-6/12 | - | 28,3 | |
| 27* | PA-6/12 | Sb₂O₃ | 30,2 | +1,9 |
| 28* | PEBA | - | 22,7 | |
| 29* | PEBA | Sb₂O₃ | 26,5 | +3,8 |
| 30* | mélange PA-6/PP | - | 20,3 | |
| 31* | mélange PA-6/PP | Sb₂O₃ | 21,6 | +1,3 |
| 32* | PA-6 | - | 24 | |
| 33* | PA-6 | Sb₂O₃ | 38 | +14 |

| | | | | |
|---|---|---|---|---|
| *Exemple comparatif | | | | |

### Exemples 34 à 43

A partir du PA-12 décrit précédemment, on prépare différents mélanges selon l'invention dans lesquels le cyanurate de mélamine, le monopentaérythritol et/ou le Sb₂O₃ représentent 12 % du poids total de chacun des mélanges par extrusion directe du PA-12 et des additifs dans une extrudeuse KO-KNEADER BUSS (vitesse de vis 45 trs/min ; débit 25 kg/h ; profil de températures 220-270-220-220-240 °C).

Les échantillons sont alors façonnés sous forme de barreaux conformément à la norme ISO R178 de façon identique à celle des échantillons des exemples 1 à 33 et on mesure leur IOL.

**Tableau 5**

| N° exemple | CM (%) | PER (%) | Sb₂O₃ (%) | IOL (%) |
|---|---|---|---|---|
| 34* | 10,2 | 1,8 | 0 | 29 |
| 35* | 7,56 | 0,84 | 3,6 | 32 |
| 36 | 4,2 | 4,2 | 3,6 | 35 |
| 37 | 3,6 | 3,6 | 4,8 | 36 |
| 38* | 3,6 | 7,2 | 1,2 | 32 |
| 39* | 2,4 | 2,4 | 7,2 | 34 |
| 40* | 0 | 6 | 6 | 28 |
| 41* | 12 | 0 | 0 | 32 |
| 42* | 0 | 12 | 0 | 28 |
| 43* | 0 | 0 | 12 | 27 |

| | | | | |
|---|---|---|---|---|
| *Exemple comparatif | | | | |

### Préparation du mélange-maître MM9

Dans une extrudeuse WERNER ® 40 équipée d'une bi-vis corotative (vitesse de vis 150 trs/min ; débit 24 kg/h ; profil de températures 230-180-195-180-180-180-185-190-195-170-190-230 °C), on prépare un mélange-maître à base de 40 % en poids du coPA-6/12 décrit précédemment, 43 % de cyanurate de mélamine, 8,5 % de monopentaérythritol et 8,5 % de Sb₂O₃.

### Exemples 44 à 52

Différentes quantités du mélange-maître précédent sont ensuite mélangées mécaniquement avec du PA-11 ou du PA-12 de viscosité inhérente égale à 1. Les taux de dilution et le PA dont lequel on effectue la dilution sont indiqués dans le tableau 6.

**Tableau 6**

| N° exemple | dilution 0 % | dilution 10 % | dilution 20 % | dilution 30 % |
|---|---|---|---|---|
| PA-12 | 44 | 45 | 46 | 47 |
| PA-11 | 48 | 49 | 50 | 51+52^{■} |

| | | | | |
|---|---|---|---|---|
| ^{■} L'exemple 52 est préparé par extrusion directe de tous les constituants sans mélange-maître intermédiaire. | | | | |

On évalue la tenue au feu (IOL & UL 94) et les propriétés mécaniques des compositions obtenues sur des barreaux, des haltères ou des plaques selon les conditions opératoires des normes de mesure mises en oeuvre. Les résultats sont réunis dans le tableau 7.

**Tableau 7**

| | Ex 44* | Ex 45* | Ex 46* | Ex 47* | Ex 48* | Ex 49* | Ex 50* | Ex 51* | Ex 52* |
|---|---|---|---|---|---|---|---|---|---|
| Ar (%) | 383 | 79 | 42 | 17 | 379 | 16 | 22 | 13 | 96 |
| RR | 64 | 32 | 33 | 39 | 63 | 33 | 32 | 35 | 35 |
| MEF | 1184 | 1202 | 1243 | 1349 | 1124 | 1257 | 1124 | 1152 | 1348 |
| choc à 23 °C | 100 nc | 14,1 | 14,7 | 10,2 | 100 nc | 17,7 | 11,3 | 14,1 | 100 nc |
| choc à -40°C | 100 nc | 15,8 | 11,4 | 8,3 | 100 nc | 12,6 | 9 | 9 | 100 nc |
| point Vicat | 173 | 170 | 168 | 164 | 183 | 181 | 179 | 176 | 182 |
| IOL 1,6mm | 25 | 33,7 | 35,7 | 34 | 24,5 | 32,9 | 37,4 | 37,2 | 39,5 |
| IOL 3,2mm | 23,4 | 31,1 | 34,9 | 34,7 | 25,8 | 30,2 | 35,9 | 35 | 35,5 |
| UL 94 1,6mm | 94V2 | 94V0 | 94V0 | 94V0 | 94V2 | 94V2 | 94V0 | 94V0 | 94V0 |
| UL 94 3,2mm | 94V2 | 94V2 | 94V0 | 94V0 | 94V2 | 94V2 | 94V2 | 94V0 | 94V0 |

| | | | | | | | | | |
|---|---|---|---|---|---|---|---|---|---|
| *Exemple comparatif | | | | | | | | | |

Les propriétés dynamométriques Ar (allongement à la rupture) et RR (résistance à la rupture) sont mesurées selon la norme ISO R 527 1B.

Le module de flexion (MEF) est mesuré selon la norme ISO 178.

La résistance au choc CHARPY est mesurée à 23 et -40 °C selon la norme ISO 179.

Le point Vicat est mesuré selon la norme ISO 306.

L'IOL est mesuré comme précédemment.

La tenue au gouttage est évaluée selon la norme NF T 51 0272.

### Préparation du mélange-maître MM10

Dans les mêmes conditions opératoires que pour MM9 et avec les mêmes proportions d'additifs, on réalise un mélange-maître MM10 dont la résine PA est un PEBA à base de PTMG (50 % du poids total du PEBA) et de PA-12 (50 % du poids total du PEBA) commercialisé par la demanderesse sous la dénomination PEBAX® MX1205 (point de fusion : 147°C ; dureté Shore D : 40).

### Exemples 53 à 65

Différentes quantités du mélange-maître précédent sont ensuite diluées avec des résines à base PA au moyen d'une extrudeuse. On mesure la tenue au feu (UL 94 et IOL) des échantillons des exemples 53 à 58 selon les normes définies plus haut ainsi. Le tableau 8 mentionne le rapport UL94/IOL.

**Tableau 8**

| N° exemple | dilution MM10 (%) | PA-12 rigide | PA-11 rigide | PA-12 plastifié | PA-12 rigide + 30 % FV | PEBA 1 | PEBA 2 | PEBA 3 |
|---|---|---|---|---|---|---|---|---|
| 53* | 0 | V2/24 | V2/25 | | | | | |
| 54* | 10 | V2/30 | V2/31 | V2/24 | | | | |
| 55* | 12,5 | | | | | V2/26 | V2/26 | V2/26 |
| 56* | 15 | | | V2/26 | | | | |
| 57* | 20 | V0/35 | V0/36 | V2/27 | V2/23 | V2/27 | V2/26 | V2/27 |
| 58* | 30 | V0/35 | V0/37 | | | | | |

| | | | | | | | | |
|---|---|---|---|---|---|---|---|---|
| *Exemple Comparatif | | | | | | | | |

### FV = Fibres de Verre

Le PA-12 rigide a une viscosité inhérente égale à 1 et son point de fusion est égal à 175 °C.

Le PA-11 rigide a une viscosité inhérente égale à 1 et son point de fusion est égal à 185 °C.

Le PEBA 1 commercialisé par la demanderesse est un élastomère thermoplastique de type PEBA (polyéther-bloc amide) à base de PA-12 (80 %) et de PTMG (20 %) (point de fusion : 169 °C ; dureté Shore D : 63)

Le PEBA 2 commercialisé par la demanderesse est un élastomère thermoplastique de type PEBA à base de PA-12 (80 %) et de polyéthylène glycol (PEG) (20 %) (point de fusion : 158 °C ; dureté Shore D : 40).

Le PEBA 3 commercialisé par la demanderesse est un élastomère thermoplastique de type PEBA à base de PA-12 (75 %)et de PEG (25 %)(point de fusion 169 °C ; dureté Shore D : 60).

On mesure la tenue au feu des échantillons des exemples 59 à 62 (dilués dans le PA-12 plastifié utilisé précédemment) selon la technique du fil incandescent à 850 °C selon la norme CEI 695-2-1 ; les résultats sont réunis dans le tableau 9.

**Tableau 9**

| N° exemple | dilution MM10 (%) | temps d'extinction (s) | hauteur flamme (cm) |
|---|---|---|---|
| 59* | 0 | 28 | 15 |
| 60* | 10 | 15 | 14 |
| 61* | 20 | 14 | 12 |
| 62* | 30 | 10 | 10 |

On évalue certaines propriétés mécaniques (Ar, RR, MEF, choc CHARPY) des échantillons des exemples 59 à 65. Les résultats sont réunis dans le tableau 10.

Les échantillons des exemples 63 à 65 sont des compositions à base de MM10 dilués ou non dans le PEBA 1 à raison de
0 % (exemple 63)
12,5 % (exemple 64)
20 % (exemple 65)

**Tableau 10**

| N° exemple | Ar (%) | RR (MPa) | MEF (MPa) | choc à 23 °C (kJ/m²) | choc à-40°C (kJ/m²) |
|---|---|---|---|---|---|
| 59* | 382 | 49 | 438 | nc | 4,4 |
| 60* | 352 | 41 | 474 | 45,1 | 6,1 |
| 61* | 338 | 37 | 492 | 39,2 | 6,2 |
| 62* | 310 | 34 | 507 | 36,8 | 6 |
| 63* | | | 290 | nc | 15 |
| 64* | | | 370 | nc | 16 |
| 65* | | | 380 | nc | 16,5 |

| | | | | | |
|---|---|---|---|---|---|
| nc = non cassé *Exemple comparatif | | | | | |

## Revendications

1. Composition thermoplastique à base de résine polyamide et à tenue au feu améliorée, caractérisée en ce que :
- elle comprend du Sb₂O₃, du cyanurate de mélamine et au moins un polyol contenant au moins quatre fois la fonction alcool en tant qu'additifs anti-feu,
- que ces trois additifs représentent de 10 à 15 % en poids par rapport au poids total de la composition,
- chacun de ces trois additifs anti-feu représente le tiers du poids total des trois additifs.

2. Composition selon la revendication 1, caractérisée en ce que la résine polyamide est choisie parmi le PA-11, le PA-12, le PA 12-12, le co PA-6/12 et/ou le PEBA.

3. Procédé de préparation de la composition selon la revendication 1 ou 2, caractérisé en ce qu'il consiste à malaxer à l'état fondu les différents constituants de la composition à une température supérieure au point de ramollissement de la résine thermoplastique.

4. Articles industriels obtenus par transformation de la composition selon la revendication 1 ou 2.

## Claims

1. Thermoplastic composition based on polyamide resin and with improved fire resistance, characterized in that:
- it comprises Sb₂O₃, melamine cyanurate and at least one polyol comprising at least four times the alcohol functional group as fire-retardant additives,
- these three additives represent from 10 to 15% by weight with respect to the total weight of the composition,
- each of these three fire-retardant additives represents a third of the total weight of the three additives.

2. Composition according to Claim 1, characterized in that the polyamide resin is chosen from PA-11, PA-12, PA-12,12, coPA-6/12 and/or PEBA.

3. Process for the preparation of the composition according to Claim 1 or 2, characterized in that it consists in melt-blending the various constituents of the composition at a temperature greater than the softening point of the thermoplastic resin.

4. Industrial articles obtained by conversion of the composition according to Claim 1 or 2.

## Patentansprüche

1. Thermoplastische Zusammensetzung auf Polyamidharzbasis mit verbessertem Brandverhalten, dadurch gekennzeichnet ist, daß
- sie Sb₂O₃, Melamincyanurat und mindestens einen Polyol, der mindestens vier Hydroxygruppen enthält, als flammwidrig machende Zusatzstoffe enthält,
- diese drei Zusatzstoffe in einem Anteil von insgesamt 10 bis 15 Gew.-%, bezogen auf das Gesamtgewicht der Zusammensetzung, enthalten sind und
- jeder dieser drei flammwidrig machenden Zusatzstoffe ein Drittel des Gesamtgewichts der drei Zusatzstoffe ausmacht.

2. Zusammensetzung nach Anspruch 1, dadurch gekennzeichnet, daß das Polyamidharz unter PA-11, PA-12, PA 12-12, dem coPA-6/12 und/oder PEBA ausgewählt ist.

3. Verfahren zur Herstellung der Zusammensetzung nach Anspruch 1 oder 2, dadurch gekennzeichnet, daß es darin besteht, die verschiedenen Bestandteile der Zusammensetzung bei einer Temperatur oberhalb der Erweichungstemperatur des thermoplastischen Harzes im geschmolzenen Zustand zu kneten.

4. Industrielle Gegenstände, erhältlich durch formgebende Verarbeitung der Zusammensetzung nach Anspruch 1 oder 2.
